## Europäisches Patentamt
## European Patent Office
## Office européen des brevets

(11) Numéro de publication: **0 027 252**
**B1**

(12) **FASCICULE DE BREVET EUROPEEN**

(45) Date de publication du fascicule du brevet: **23.03.83**

(51) Int. Cl.³: **B 28 B 3/26,** B 29 F 3/04

(21) Numéro de dépôt: **80106100.3**

(22) Date de dépôt: **08.10.80**

(54) Dispositif pour la fabrication de corps à structure alvéolaire par extrusion d'une matière céramique, et procédé de fabrication dudit dispositif.

(30) Priorité: **15.10.79 FR 7925557**

(43) Date de publication de la demande:
**22.04.81 Bulletin 81/16**

(45) Mention de la délivrance du brevet:
**23.03.83 Bulletin 83/12**

(84) Etats contractants désignés:
**BE DE FR GB IT NL SE**

(56) Documents cités:
**GB - A - 2 004 228**
**US - A - 3 609 808**
**US - A - 803 951**
**US - A - 3 837 783**

(73) Titulaire: **CERAVER Société anonyme dite:**
**12, rue de la Baume**
**F-75008 Paris (FR)**

(72) Inventeur: **Minjolle, Louis**
**22, Place Brauhauban**
**F-65000 Tarbes (FR)**

(74) Mandataire: **Weinmiller, Jürgen et al,**
**Zeppelinstrasse 63**
**D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Dispositif pour la fabrication de corps à structure alvéolaire par extrusion d'une matière
céramique, et procédé de fabrication dudit dispositif

La présente invention concerne un dispositif pour la fabrication de corps à structure alvéolaire par extrusion d'une matière céramique et un procédé de fabrication dudit dispositif.

Il est connu par le brevet US—A—38 37 783 un dispositif permettant d'obtenir par extrusion un corps à structure alvéolaire, en particulier en matière céramique. Ce dispositif est de conception monolithique, et comprend des canaux d'alimentation ménagés dans une pièce massive, lesdits canaux débouchant en aval sur un réseau de fentes de décharge interconnectées, organisées en une grille, par lesquelles sort directement la matière extrudée; les canaux étant longitudinaux, il est nécessaire de gêner l'écoulement longitudinal de la matière pour favoriser l'écoulement latéral d'une partie de celle-ci, de façon à avoir un recollement de la matière sortant des canaux, ce qui permet d'obtenir directement les différentes parois du corps qui définissent une structure alvéolaire.

Un dispositif de ce genre convient mal lorsque l'on désire extruder des corps de section importante, par exemple une structure cylindrique de 200mm de diamètre. En effet, la pièce qui est percée en de multiples endroits pour définir les canaux doit nécessairement avoir une épaisseur importante pour avoir une résistance mécanique adaptée aux pressions élevées d'alimentation, ce que oblige à percer des orifices très longs par rapport à leur diamètre propre, et le rapport entre longueur et alésage dépasse alors très largement la valeur 10, ce qui est généralement considéré comme défavorable. Ceci représente une limitation importante qui est inévitable avec les techniques actuelles basées sur ce principe.

En outre il est connu par le brevet US—A—3609808 un dispositif d'extrusion d'une matière plastique comportant une succession d'éléments coaxiaux emboîtés les une autour des autres.

L'invention a pour but de perfectionner un dispositif selon la préambule de la revendication 1 qui est robuste et apte à l'extrusion de corps de section importante, aisé à réaliser avec les techniques ordinaires d'usinage et procédé pour la fabrication de ce dispositif.

Ce but est atteint par un dispositif d'extrusion d'une matière céramique, pour la fabrication de corps à structure alvéolaire qui est caractérisé par le fait qu'il comprend une succession d'éléments coaxiaux emboîtés les uns autour des autres, que deux éléments adjacents définissent entre eux des canaux longitudinaux débouchant en leur extrémité aval dans un canal annulaire, et que lesdits éléments coaxiaux emboîtés présentent, inférieurement et au niveau des canaux annulaires, des encoches essentiellement rayonnantes et de largeur inférieure à la largeur des canaux longitudinaux, de sorte que la matière céramique s'écoulant par lesdits canaux longitudinaux soit régulièrement répartie dans les canaux annulaires et les encoches rayonnantes pour former directement à l'extrusion un corps à structure alvéolaire.

Le dispositif de l'invention peut présenter en outre l'une au moins des caractéristiques définies par les revendications 2 à 10.

L'invention concerne également un procédé de fabrication de ce dispositif, ce procédé étant caractérisé par le fait que l'on pratique sur un premier élément un rainure annulaire à l'extrémité aval de celui-ci et une série de rainures longitudinales tout autour de sa surface radiale extérieure, que l'on monte sur ledit premier élément ainsi usiné un deuxième élément s'emboîtant autour de celui-ci, que l'on pratique sur ce deuxième élément une rainure annulaire et des rainures longitudinales analogues aux précédentes, et ainsi de suite progressivement jusqu'à obtention du dispositif complet. Avantageusement, pour chaque élément, la rainure annulaire sera pratiquée avant les rainures longitudinales; enfin, de préférence, on pratiquera en phase finale les encoches rayonnantes en usinant simultanément tous les éléments emboîtés concernés.

L'invention sera décrite plus clairement ci-après à l'aide d'un exemple de mise en oeuvre donné à titre illustratif, en référence aux figures du dessin annexé où:

— la figure 1 est une vue de dessous d'une dispositif conforme à l'invention, montrant en particulier le type de grille obtenu pour l'extrusion de la matière céramique,
— la figure 2 est la coupe II—II de la figure 1, illustrant des éléments intermédiaires en couronnes épaulées, emboîtés successivement à partir d'un élément central,
— la figure 3 est une vue en coupe partielle d'un des éléments intermédiaires de la figure 2, prêt à être emboîté,
— la figure 4 est une vue de dessus de l'élément de la figure 3,
— les figures 5A à 5G illustrent schématiquement les différentes phases successives du procédé conforme à l'invention, permettant d'arriver au dispositif complet des figures 1 et 2.

Le dispositif est essentiellement conçu en une succession d'éléments coaxiaux métalliques emboîtés les uns autour des autres, deux éléments adjacents définissant entre eux des canaux longitudinaux 2 débouchant en leur extrémité aval dans un canal annulaire 3; les éléments emboîtés présentent en outre, inférieurement et au niveau des canaux annulaires 3, des encoches 4 essentiellement rayonnantes et de largeur inférieur à la largeur des canaux longitudinaux 2, de sorte que la matière céramique s'écoulant par lesdits canaux longitudinaux soit régulièrement répartie dans les canaux annulaires 3 et les encoches rayonnantes 4 pour former directement à l'extrusion un corps à structure alvéolaire.

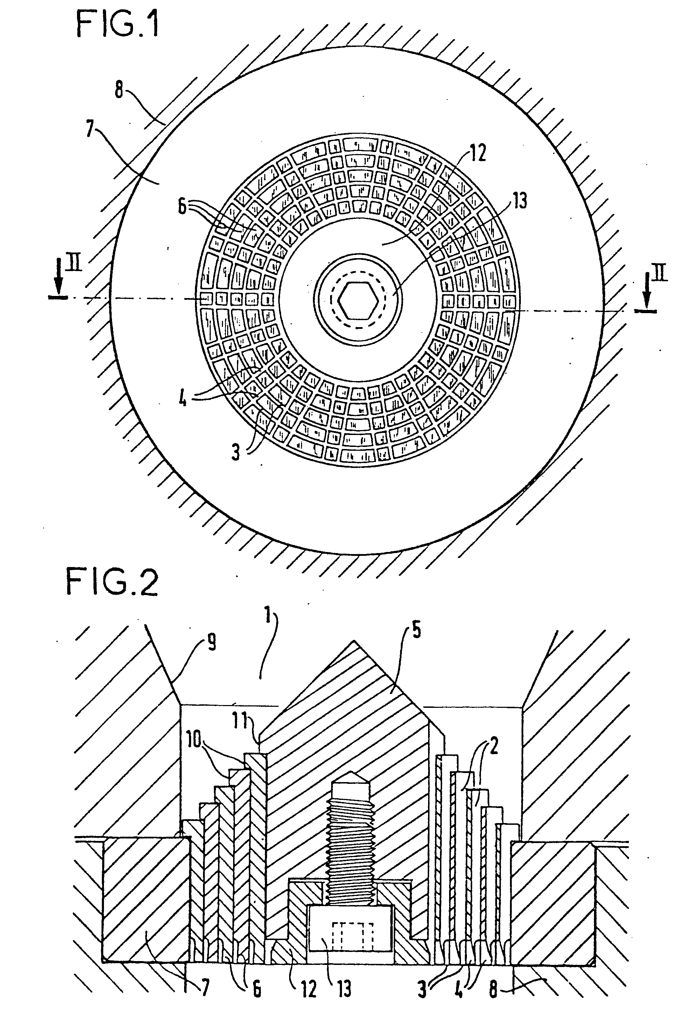

Les éléments coaxiaux emboîtés comprennent un élément central intérieur 5 formant poinçon, et une succession d'éléments intermédiaires minces 6 emboîtés successivement à partir dudit élément central jusqu'à un élément extérieur 7 formant buse support, les encoches rayonnantes 4 étant uniquement prévues aux extrémités aval desdits éléments intermédiaires 6; pour compléter le dispositif, on a esquissé en figure 2 les organes de support, comprenant essentiellement un centreur 8 et un cône d'alimentation 9.

Il faut naturellement que les éléments coaxiaux emboîtés soient interconnectés de façon à pouvoir supporter les pressions élevées d'alimentation sans risque d'expulsion de l'un d'entre eux. Plusieurs solutions sont possibles pour cela: on peut prévoir un frettage direct d'un élément sur l'élément adjacent qu'il entoure, ce qui suppose un positionnement très précis et délicat des pièces à fretter (d'autant plus que l'on utilisera essentiellement un frettage par voie thermique, soit en refroidissant l'élément intérieur soit en chauffant l'élément extérieur, avant d'emmancher et de laisser refroidir ensuite), ou encore une soudure avec brasure des éléments entre eux (ce qui minimise les contraintes appliquées), ou encore une solution plus simple à mettre en oeuvre, cette dernière étant celle qui a été illustrée. Pour cela, les éléments intermédiaires 6 et l'élément central intérieur 5 présentent en leur extrémité amont un épaulement respectivement 10, 11 permettant à chaque élément de s'appuyer sur l'élément emboîté autour de lui. Cette solution, malgré son inconvénient de favoriser les pertes de charge en raison de l'étagement des parties amont des pièces, inconvénient que ne présentaient pas les deux solutions précédentes puisqu'il était possible d'avoir les bords amont des éléments au même niveau, présente néanmoins l'avantage de la facilité de montage (en force) et de la précision globale élevée pour l'ensemble emboîté.

On perçoit déjà l'avantage de cette conception pour l'obtention de corps à section importante, car il est possible d'avoir un outillage encombrant en hauteur avec un appui d'ensemble fiable, et des éléments d'outillage hauts de plusieurs centimètres, et jusqu'à une hauteur sensiblement égale du diamètre, sont envisageables, ce qui ouvre la voie à des sections ayant un diamètre au moins égal à 200mm, et ceci sans l'inconvénient d'avoir des perçages de trous exagérément longs.

On se trouve donc ici en présence d'un empilement progressif dont le sommet est représenté par le manchon central qui s'affine vers l'amont pour favoriser la bonne répartition de la matière arrivant par le cône d'alimentation.

Les canaux annulaires 3 définis par l'élément central 5 et l'élément intermédiaire 6 adjacent à celui-ci d'une part, et par l'élément extérieur 7 et l'élément intermédiaire 6 adjacent à celui-ci d'autre part, sont plus larges que les canaux annulaires définis par deux éléments intermédiaires adjacents; ceci permet d'avoir des parois latérales extérieure et intérieure plus épaisses pour le corps extrudé, ce qui accroît la résistance mécanique de celui-ci, caractéristique de grande importance pour des corps ayant une longueur importante, 1m par exemple.

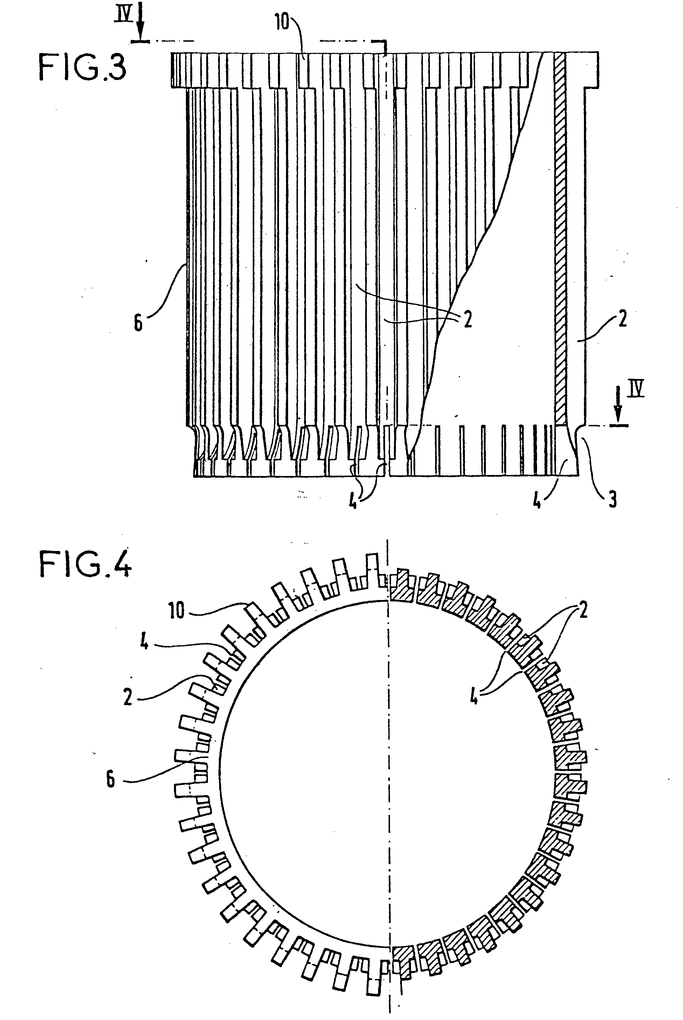

Ces canaux annulaires 3 sont définis d'une part par une rainure circulaire pratiquée extérieurement sur l'extrémité aval de l'élément central 5 et des éléments intermédiaires 6, et d'autre part par la surface intérieure de l'élément adjacent à ceux-ci. On a illustré ici une modalité particullière avantageuse concernant l'élément central 5, selon laquelle la rainure circulaire dudit élément est définie par une portion escamotable 12 se fixant par une vis 13, ladite portion ayant sensiblement la forme d'une rondelle tronconique pour sa partie saillant dudit élément: l'avantage procuré sera mieux compris lorsque l'on décrira le procédé un peu plus loin. De préférence, les canaux annulaires 3 se rétrécissent longitudinalement vers l'aval, grâce à une légère pente (3° par exemple) des rainures annulaires en contre-dépouille (voir figure 3): ceci facilite le recollement de la matière entre deux canaux adjacents; cette contre-dépouille, rendue possible comme on le verra plus loin grâce à un usinage d'un élément quelconque emboîté sur le ou les précédents, n'était pas possible avec les conceptions actuelles des outillages d'extrusion utilisant par exemple une électrode tournante pour l'électro-érosion.

Les éléments constitutifs, en général métalliques (aciers inoxydables ou aciers traités contre certains types de corrosion), sont cylindriques avec un axe central commun, ce qui donne des corps à structure alvéolaire définie par des cloisons radiales et circulaires; on peut envisager d'autres types d'éléments emboîtés, par exemple en carré ou en rectangle (la grille de sortie étant alors à maillage carré ou rectangulaire), mais ces types d'éléments sont plus complexes à usiner.

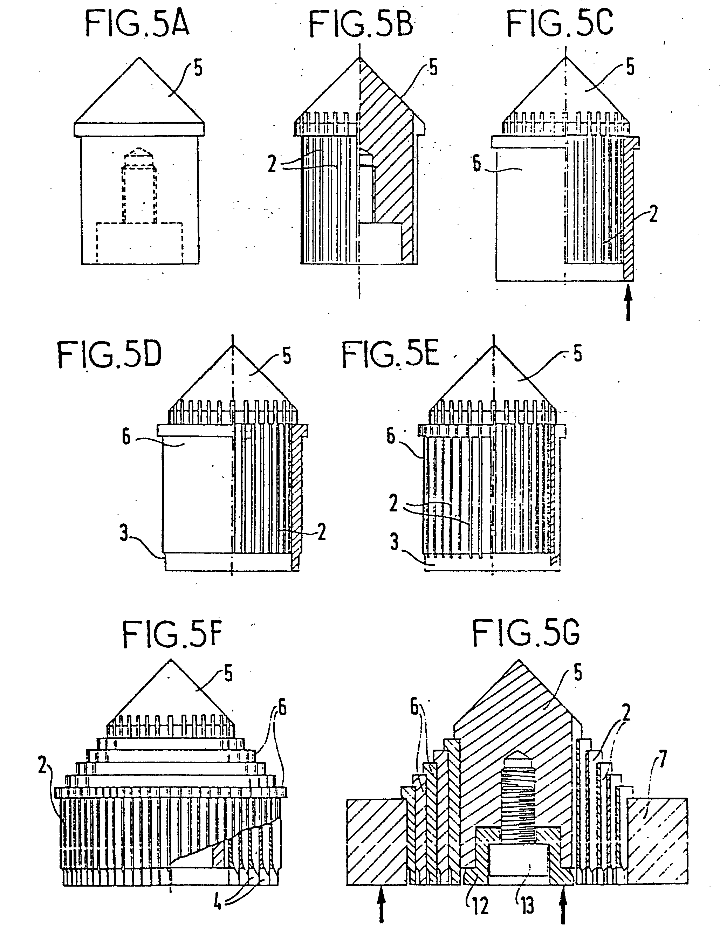

Ainsi que cela a été dit plus haut, l'invention concerne également un procédé d'obtention du dispositif qui vient d'être décrit, et ce sont les étapes successives de ce procédé qui ont été schématiquement illustrées aux figures 5A à 5G:

— figure 5A, l'élément central 5 est positionné, sans sa portion escamotable,
— figure 5B, on pratique des encoches selon un fraisage ou un meulage longitudinal (l'extrémité arrondie des canaux en figure 2 rappelle un usinage par fraise-disque); la pièce relativement massive est suffisamment rigide pour être ainsi dentelée,

— figure 5C, on monte un élément intermédiaire 6 non encore usiné sur l'élément central 5,

— figures 5D et 5E, on pratique la rainure annulaire en bout de l'élément 6, et, de préférence après, des encoches selon un usinage longitudinal: la rigidité de l'élément mince 6 est procurée par l'élément central qu'il entoure, de sorte qu'il n'y a pratiquement aucun risque de casser la pièce à l'usinage; ces opérations sont réitérées, jusqu'à ce qu'on obtienne l'empilement désiré, l'élément intermédiaire à usiner bénéficiant chaque fois du support des éléments précédents qu'il entoure,

— figure 5F, on pratique simultanément, par exemple au moyen d'un scie à fil, les encoches 4 de tous les éléments intermédiaires (ici deux fois 18 encoches), ce qui permet d'obtenir des parois de structure alvéolaire dont l'épaisseur peut descendre jusqu'à 0,1mm,

— figure 5G, on rapporte alors la portion escamotable 12 de l'élément central, ainsi que l'élément extérieur 7 (ceci est seulement réalisé maintenant, car la présence de ces deux pièces aurait empêché l'obtention des encoches par scie), et le dispositif est prêt à être monté et fonctionner.

L'on peut extruder selon une direction verticale ou horizontale: dans ce dernier cas, la matière céramique présentera un seuil de cisaillement élevé, et on pourra alors utiliser un tapis recevant la portion extrudée (qu'il suffit de couper à la longueur désirée) et se déplaçant à une vitesse qui peut être asservie à la vitesse d'extrusion de la matière.

**Revendications**

1. Dispositif d'extrusion d'une matière céramique pour la fabrication de corps à structure alvéolaire, caractérisé par le fait qu'il comprend une succession d'éléments coaxiaux emboîtés les uns autour des autres, que deux éléments adjacents définissent entre eux des canaux longitudinaux (2) débouchant en leur extrémité aval dans un canal annulaire (3), et que lesdits éléments coaxiaux emboîtés présentent, inférieurement et au niveau des canaux annulaires, des encoches (4) essentiellement rayonnantes et de largeur inférieure à la largeur des canaux longitudinaux, de sorte que la matière céramique s'écoulant par lesdits canaux longitudinaux soit régulièrement répartie dans les canaux annulaires et les encoches rayonnantes pour former directement à l'extrusion ledit corps à structure alvéolaire.

2. Dispositif selon la revendication 1, caractérisé par le fait que les éléments coaxiaux emboîtés comprennent un élément central intérieur formant poinçon (5), et une succession d'éléments intermédiaires (6) emboîtés successivement à partir dudit élément central jusqu'à un élément extérieur formant buse support (7), les encoches rayonnantes étant uniquement prévues aux extrémités aval desdits éléments intermédiaires.

3. Dispositif selon la revendication 2, caractérisé par le fait que les éléments coaxiaux emboîtés sont interconnectés par frettage direct d'un élément sur l'élément adjacent qu'il entoure.

4. Dispositif selon la revendication 2, caractérisé par le fait que les éléments intermédiaires et l'élément central intérieur présentent en leur extrémité amont un épaulement (10, 11) permettant à chaque élément de s'appuyer sur l'élément emboîté autour de lui.

5. Dispositif selon la revendication 4, caractérisé par le fait que les éléments coaxiaux emboîtés définissent extérieurement un empilement progressif dont le sommet est représenté par l'élément central intérieur qui s'affine vers l'amont.

6. Dispositif selon l'une des revendications 2 à 5, caractérisé par le fait que les canaux annulaires définis par l'élément central intérieur (5) et l'élément intermédiaire (6) adjacent à celui-ci d'une part, et par l'élément extérieur (7) et l'élément intermédiaire adjacent à celui-ci d'autre part, sont plus larges que les canaux annulaires définis par deux éléments intermédiaires adjacents.

7. Dispositif selon l'une des revendications 2 à 6, caractérisé par le fait que les canaux annulaires sont définis par une rainure circulaire pratiquée extérieurement sur l'extrémité aval de l'élément central et des éléments intermédiaires d'une part, et par la surface intérieure de l'élément adjacent à ceux-ci d'autre part.

8. Dispositif selon la revendication 7, caractérisé par le fait que la rainure circulaire de l'élément central est définie par une portion escamotable (12) se fixant sur ledit élément, ladite portion ayant sensiblement la forme d'une rondelle tronconique pour sa partie saillant dudit élément.

9. Dispositif selon les revendications 7 ou 8, caractérisé par le fait que les canaux annulaires se rétrécissent longitudinalement vers l'aval grâce à une légère pente des rainures circulaires en contre-dépouille.

10. Dispositif selon l'une des revendications précédentes, caractérisé par le fait que les éléments constitutifs sont essentiellement cylindriques avec un axe central commun.

11. Procédé de fabrication d'un dispositif selon l'une des revendications précédentes, caractérisé par la fait que l'on pratique sur un premier élément un canal annulaire (3) à l'extrémité aval de celui-ci et une série de canaux longitudinaux tout autour de sa surface enveloppante extérieure, que l'on monte sur ledit premier élément ainsi usiné un deuxième élément s'emboîtant autour de celui-ci, que l'on pratique sur ce deuxième élément un canal annulaire et des canaux longitudinaux analogues aux précédentes, et ainsi de suite progressivement jusqu'à obtention de dispositif complet.

12. Procédé selon la revendication 11, caractérisé par le fait que pour chaque élément, le canal annulaire est pratiquée avant les canaux longitudinaux.

13. Procédé selon l'une des revendications 11 et 12, caractérisé par le fait que l'on pratique en phase finale les encoches rayonnantes (4) en usinant simultanément tous les éléments emboîtés.

## Patentansprüche

1. Vorrichtung zur Extrusion eines keramischen Materials für die Herstellung von Körpern mit wabenförmiger Struktur, dadurch gekennzeichnet, daß sie eine Folge von koaxialen Elementen aufweisen, die umeinander geschachtelt sind, daß zwei benachbarte Elemente zwischen sich Längskanäle (2) bilden, die an ihrem stromabwärts liegenden Ende in einem ringförmigen Kanal (3) münden, und daß die verschachtelten koaxialen Elemente unterhalb und in Höhe der ringförmigen Kanäle Kerben (4) aufweisen, die im wesentlichen strahlenförmig angeordnet sind und deren Bretie geringer ist als die der Längskanäle, so daß das keramische Material, das aus diesen Längskanälen fließt, sich gleichmäßig in den ringförmigen Kanälen und den strahlenförmig angeordneten Kerben verteilt, um gleich bei der Extrusion den Körper mit wabenförmiger Struktur zu bilden.

2. Vorrichtung nach Anspruch 1, dadurch gekennzeichnet, daß die verschachtelten koaxialen Elemente ein zentrales inneres Element, das einen Stempel (5) bildet, und eine Folge von Zwischenelementen (6) aufweisen, die umeinander ausgehend von dem zentralen Element bis zu einem äußeren Element verschachtelt sind, das eine Stützdüse (7) bildet, wobei die strahlenförmig angeordneten Kerben nur an den stromabwärts liegenden Enden der Zwischenelemente vorgesehen sind.

3. Vorrichtung nach Anspruch 2, dadurch gekennzeichnet, daß die verschachtelten koaxialen Elemente durch direktes Aufschrumpfen eines Elements auf das innen benachbarte Element miteinander verbunden sind.

4. Vorrichtung nach Anspruch 2, dadurch gekennzeichnet, daß die Zwischenelemente und das zentrale innere Element an ihrem stromaufwärts liegenden Ende eine Schulter (10, 11) aufweisen, die es jedem Element ermöglicht, sich auf dem es umgebenden Element abzustützen.

5. Vorrichtung nach Anspruch 4, dadurch gekennzeichnet, daß die verschachtelten koaxialen Elemente außen einen ansteigenden Stapel bilden, dessen Spitze durch das zentrale innere stromaufwärts angespitzte Element dargestellt ist.

6. Vorrichtung nach einem der Ansprüche 2 bis 5, dadurch gekennzeichnet, daß die durch das zentrale innere Element (5) und das ihm benachbarte Zwischenelement (6) einerseits und das äußere Element (7) und das ihm benachbarte Zwischenelement andererseits gebildeten Ringkanäle größe sind als die von zwei benachbarten Zwischenelementen gebildeten Ringkanäle.

7. Vorrichtung nach einem der Ansprüche 2 bis 6, dadurch gekennzeichnet, daß die Ringkanäle einerseits durch eine Kreisnut, die außen auf dem stromabwärts liegenden Ende des zentralen Elements und der Zwischenelemente angebracht ist, und andererseits durch die innere Oberfläche des diesen benachbarten Elements gebildet werden.

8. Vorrichtung nach Anspruch 7, dadurch gekennzeichnet, daß die Kreisnut des zentralen Elements durch ein entfernbares Teil (12) gebildet wird, das auf diesem Element befestigt wird, wobei dieses Teil im wesentlichen die Form einer kegelstumpfförmigen Scheibe in dem Bereich hat, in dem es von diesem Element wegsteht.

9. Vorrichtung nach den Ansprüchen 7 oder 8, dadurch gekennzeichnet, daß die Ringkanäle sich in Längsrichtung stromabwärts verengen aufgrund einer leichten Neigung der Kreisnuten in Gegenrichtung.

10. Vorrichtung nach einem der vorstehenden Ansprüche, dadurch gekennzeichnet, daß die Grundbestandteile im wesentlichen zylindrisch sind und eine gemeinsame zentrale Achse besitzen.

11. Verfahren zur Herstellung einer Vorrichtung nach einem der vorstehenden Ansprüche, dadurch gekennzeichnet, daß man auf einem ersten Element einen Ringkanal (3) am stromabwärts liegenden Ende und eine Reihe von Längskanälen um seine äußere Oberfläche anbringt, daß man auf das so bearbeitete erste Element ein zweites Element bringt, das darüber geschoben wird, daß man auf diesem zweiten Element einen Ringkanal und Längskanäle anbringt, die den oben genannten gleichen, und so weiter fortschreitet, bis die ganze Vorrichtung fertig ist.

12. Verfahren nach Anspruch 11, dadurch gekennzeichnet, daß für jedes Element der Ringkanal vor den Längskanälen hergestellt wird.

13. Verfahren nach einem der Ansprüche 11 und 12, dadurch gekennzeichnet, daß in der Endphase die strahlenförmig angeordneten Kerben (4) angebracht werden, indem alle verschachtelten Elemente gleichzeitig bearbeitet werden.

## Claims

1. Apparatus for extruding a ceramic material to manufacture a body of cellular structure, characterized in that it comprises a succession of coaxial components fitted one round another, with two successive adjacent components defining between them longitudinal ducts (2) whose downstream ends communicate with an annular duct (3) and that said coaxial components fitted one round another present at the bottom and on level with the annular ducts essentially radial notches (4) of a width less than that of the longitudinal ducts, so that the ceramic material which flows through said longitudinal ducts is evenly distributed in the annular ducts and in the radial notches to form a body of cellular structure directly on extrusion.

2. Apparatus according to claim 1, characterized in that the coaxial components which are fitted one round another include an inner central component which forms a punch (5), and a succession of intermediate components (6) fitted successively one round another from said central component up to an outer component which forms a support nozzle (7), said radial notches being provided exclusively at the downstream ends of said intermediate components.

3. Apparatus according to claim 2, characterized in that the coaxial components which are fitted one round another are interconnected by directly shrinking one component onto an adjacent component which it surrounds.

4. Apparatus according to claim 2, characterized in that the upstream ends of the intermediate components and the inner central component have shoulders (10, 11) to allow each component to press against the component fitted round it.

5. Apparatus according to claim 4, characterized in that the coaxial components which are fitted one round another define on the outside a tapering stack whose top is represented by the inner central component which tapers towards the upstream end.

6. Apparatus according to one of the claims 2 to 5, characterized in that the annular ducts defined by the inner central component (5) and the intermediate component (6) adjacent to it and by the outer component (7) and the intermediate component adjacent to it are wider than the annular ducts defined by two intermediate components adjacent to each other.

7. Apparatus according to one of the claims 2 to 6, characterized in that the annular ducts are defined by a circular groove formed on the outside at the downstream end of the central component and of the intermediate components and by the outer surface of the component adjacent to these intermediate components.

8. Apparatus according to claim 7, characterized in that the annular groove of the central component is defined by a removable portion (12) which is fixed on said component, said portion having substantially the shape of a frusto-conical washer in its part which protrudes from said component.

9. Apparatus according to claim 7 or 8, characterized in that the annular ducts taper longitudinally towards the downstream end due to a slight slope of the undercut annular grooves.

10. Apparatus according to one of the preceding claims, characterized in that the components are essentially cylindrical with a central common axis.

11. Method of manufacturing an apparatus according to one of the preceding claims, characterized in that an annular groove (3) is formed at the downstream end of a first component and a series of longitudinal grooves is formed all round its radial outer surface, in that a second component is fitted round said first component when the latter has thus been machined, in that an annular groove and longitudinal grooves analogous to those which have just been mentioned hereinabove are formed on said second component and so on, progressively until the complete apparatus is formed.

12. A method according to claim 11, characterized in that for each component, the annular groove is formed prior to the longitudinal grooves.

13. A method according to claims 11 and 12, characterized in that the radial notches (4) are formed in the final step by machining simultaneously all the components which are fitted one round another.

O 027 252

FIG.1

FIG.2

FIG.3

FIG.4

# FIG.5A

# FIG.5B

# FIG.5C

# FIG.5D

# FIG.5E

# FIG.5F

# FIG.5G